# EUROPÄISCHE PATENTSCHRIFT

(11) **EP 3 516 242 B1**
(45) Veröffentlichungstag und Bekanntmachung des Hinweises auf die Patenterteilung: **22.07.2020**
(21) Anmeldenummer: 17780313.7
(22) Anmeldetag: 15.09.2017
(51) Int. Cl.: F16B 5/02

(54) **TOLERANZAUSGLEICHSELEMENT**
TOLERANCE COMPENSATING ELEMENT
ÉLÉMENT DE COMPENSATION DE TOLÉRANCES

(30) Priorität: 22.09.2016 DE 202016105286 U
(43) Veröffentlichungstag der Anmeldung: 31.07.2019
(73) Patentinhaber: Schwarzbich, Jörg, 33615 Bielefeld (DE)
(72) Erfinder: Schwarzbich, Jörg, 33615 Bielefeld (DE)
(74) Vertreter: Ter Meer Steinmeister & Partner
(86) Internationale Anmeldenummer: PCT/EP2017/073330
(87) Internationale Veröffentlichungsnummer: WO 2018/054785

(56) Entgegenhaltungen:
- EP-A1- 1 180 605
- WO-A1-2014/120707
- DE-A1-102012 105 890
- DE-A1-102015 103 491
- DE-U1- 20 021 194

## Beschreibung

Die Erfindung betrifft ein Toleranzausgleichselement für eine Vorrichtung zum Verbinden von Bauteilen mittels einer durch das Toleranzausgleichselement hindurch gesteckten Verbindungsschraube, welches Toleranzausgleichselement ein Federelement, ein inneres und ein äußeres Gewindeteil, die miteinander in Gewindeeingriff stehen und zusammen einen in der Länge verstellbaren Abstandshalter bilden, und eine in dem inneren Gewindeteil gehaltenen Hülse aufweist, die das Federelement in einer Position hält, in der es mit dem Umfang der durchgesteckten Verbindungsschraube in Reibberührung kommt.

Aus WO 2014/005899 A1 ist ein Toleranzausgleichselement dieser Art bekannt, bei dem die beiden Gewindeteile kostengünstig aus gewickeltem Federstahldraht hergestellt sind. Das durch die Hülse an dem inneren Gewindeteil gehaltene Federelement bildet eine Rutschkupplung, durch die ein Drehmoment von der Verbindungsschraube auf das innere Gewindeteil übertragen werden kann, wenn die Verbindungsschraube in eines der zu verbindenden Bauteile eingeschraubt wird. Auf diese Weise lässt sich beim Einschrauben der Verbindungsschraube automatisch eine entsprechende Ausschraubbewegung des inneren Gewindeteils induzieren, die solange anhält, bis der Abstand zwischen den zu verbindenden Bauteilen überbrückt ist. Ein weiteres Toleranzausgleichselement dieser Art ist aus der DE 10 2012 105890 A1 bekannt.

Aus EP 1 215 401 B1 ist ein Toleranzausgleichselement mit einer Ausdrehsicherung bekannt, die verhindert, dass das innere Gewindeteil ganz aus dem äußeren Gewindeteil herausgeschraubt wird. Zu diesem Zweck ist an einer Fassung, die im Presssitz auf dem Außenumfang des äußeren Gewindeteils sitzt, ein Anschlag gebildet, der ein Ende des äußeren Gewindeteils übergreift und, wenn der maximale Ausschraubweg erreicht ist, an einer Schulter zur Anlage kommt, die am Ende des Gewindeabschnitts des inneren Gewindeteils gebildet ist. Durch diesen Anschlag wird die Ausdrehbewegung des inneren Gewindeteils so begrenzt, dass dessen Gewindeabschnitt stets innerhalb des äußeren Gewindeteils verbleibt und nur ein gewindefreier Abschnitt des inneren Gewindeteils aus dem äußeren Gewindeteil herausragt.

Aufgabe der Erfindung ist es, eine verbesserte Ausdrehsicherung zu schaffen, die sich bei Toleranzausgleichselementen der eingangs genannten Art einsetzen lässt.

Diese Aufgabe wird erfindungsgemäß dadurch gelöst, dass das Toleranzausgleichselement eine Ausdrehsicherung in der Form eines Ringes aufweist, der sich drehbar an einem Ende des Abstandshalters abstützt und mindestens einen axial in die Hülse ragenden Arm aufweist, der am freien Ende eine nach außen gekröpfte Klaue bildet, an der ein an der Hülse gebildeter Anschlag anstößt, wenn ein maximaler Ausschraubweg des inneren Gewindeteils erreicht ist.

Erfindungsgemäß wird somit der Anschlag an der Hülse gebildet, die im Inneren des inneren Gewindeteils gehalten ist, und die mit dem Anschlag zusammenwirkende Klaue ist an einem Arm ausgebildet, der sich von einem Ende des Abstandshalters aus axial durch das Innere der Hülse erstreckt. Wenn sich beim Einschrauben der Verbindungsschraube das Federelement, die Hülse und das innere Gewindeteil mitdrehen, so kann sich auch der die Ausdrehsicherung bildende Ring mitdrehen, so dass das Federelement und der Arm der Ausdrehsicherung stets zueinander winkelversetzte Positionen einnehmen und somit der Reibschluss zwischen der Verbindungsschraube und dem Federelement aufrechterhalten werden kann.

Ein Vorteil der Erfindung besteht darin, dass sich der Gewindeabschnitt des inneren Gewindeteils im wesentlichen über die gesamte axiale Länge dieses Gewindeteils erstrecken kann, also auch über den Abschnitt, der bei maximalem Ausschraubweg aus dem äußeren Gewindeteil herausragt. Das innere Gewindeteil kann deshalb ähnlich wie in der eingangs genannten Druckschrift durch einen gewickelten Draht gebildet werden.

Vorteilhafte Ausgestaltungen und Weiterbildungen der Erfindung sind in den Unteransprüchen angegeben.

Der Arm der Ausdrehsicherung kann ein Schwalbenschwanzprofil oder ein T-förmiges Profil haben und passend in einer hinterschnittenen Nut bzw. einer Schwalbenschwanznut in der inneren Umfangsfläche der Hülse aufgenommen sein.

Die Hülse kann zumindest auf einem Teil ihres Außenumfangs ein Gewinde aufweisen, das es erlaubt, die Hülse in das innere Gewindeteil einzuschrauben.

In einer vorteilhaften Ausführungsform sind beide Gewindeteile aus gewickeltem Draht hergestellt.

An den entgegengesetzten Enden kann der Abstandshalter Abschlussscheiben aus Metall aufweisen, von denen eine eine reliefartige Ausnehmung aufweist, die die zu der ersten Windung des äußeren Gewindeteils oder beide Gewindeteile komplementär ist, während die andere Abschlussscheibe eine reliefartige Ausnehmung aufweist, die zu der letzten Windung des inneren Gewindeteils oder beider Gewindeteile komplementär ist. Das erlaubt es, die Gewindesteigungen der schraubenförmigen Windungen der Gewindeteile so auszugleichen, dass die voneinander abgewandten Oberflächen der Abschlussscheiben, mit denen der Abstandshalter an den zu verbindenden Bauteilen anliegt, exakt parallel zueinander ausgerichtet sind.

Das äußere Gewindeteil kann von einem Gehäuse umgeben sein, das beispielsweise dazu dienen kann, das Toleranzausgleichselement mit einem der zu verbindenden Bauteile zu verclipsen. Eine der Abschlussscheiben kann durch Verrastung in diesem Gehäuse gehalten sein.

Die andere Abschlussscheibe kann durch Verrastung an der Hülse fixiert sein, die in dem inneren Gewindeteil gehalten ist.

Im folgenden wird ein Ausführungsbeispiel anhand der Zeichnung näher erläutert.

Es zeigen:
- Fig. 1: einen axialen Schnitt durch das Toleranzausgleichselement in einem Zustand mit minimalem Axialmaß;
- Fig. 2: Explosionsdarstellungen einer Hülse, eines Federelements und einer Ausdrehsicherung des Toleranzausgleichselements nach Fig. 1;
- Fig. 3: das Toleranzausgleichselement nach Fig. 1 im Zustand mit maximalem Axialmaß; und
- Fig. 4: einen Schnitt längs der Linie IV - IV in Fig. 3.

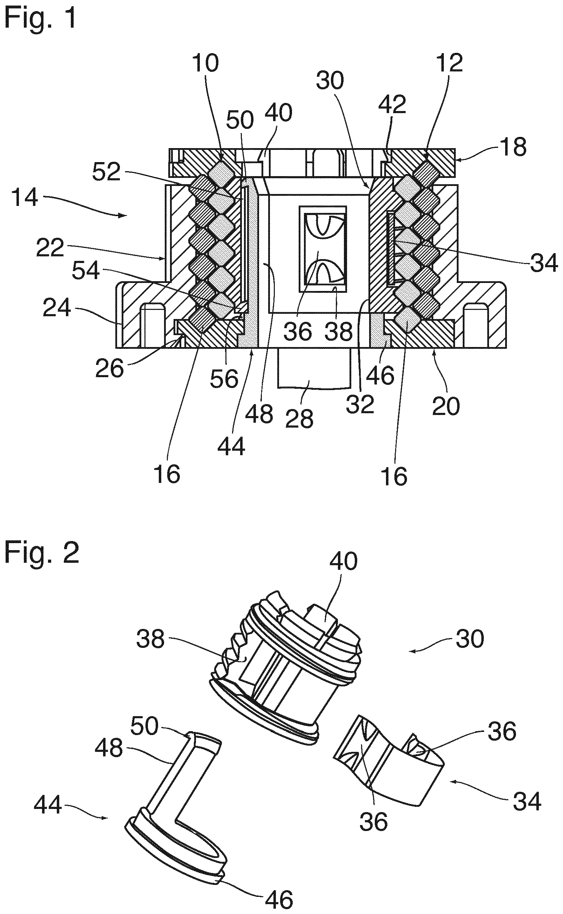

Das in Fig. 1 gezeigte Toleranzausgleichselement weist ein inneres Gewindeteil 10 und ein äußeres Gewindeteil 12 auf, die miteinander in Gewindeeingriff stehen und zusammen einen in der Länge verstellbaren Abstandshalter 14 bilden. Jedes der beiden Gewindeteile 10, 12 wird durch einen zu einer Wendel gewickelten Draht 16, beispielsweise einen Federstahldraht gebildet, der einen quadratischen Querschnitt hat und so gewickelt ist, dass eine Diagonale des quadratischen Querschnitts der Axialrichtung der Wendel entspricht und die einzelnen Windungen der Wendel auf Block aneinanderliegen. Die Kanten des Drahtes 16 können jeweils leicht verrundet oder abgefast sein, so dass der Draht nicht nach innen oder außen ausbricht, wenn die Wendel einer axialen Belastung ausgesetzt wird.

An dem inneren Gewindeteil 10 ist am oberen Ende eine Abschlussscheibe 18 aus Metall befestigt, die an der Unterseite ein eingeprägtes Relief aufweist, das zu den obersten Windungen der Gewindeteile 10 und 12 komplementär ist. Entsprechend ist am unteren Ende des äußeren Gewindeteils 12 eine Abschlussscheibe 20 befestigt, die an der Oberseite ein zu den unteren Windungen der Gewindeteile komplementäres Relief hat. Durch die reliefartigen Einprägungen werden die Gewindesteigungen des Drahtes 16 so ausgeglichen, dass die voneinander abgewandten oberen und unteren Oberflächen der Abschlussscheiben 18, 20 parallel zueinander ausgerichtet sind.

Das äußere Gewindeteil 12 ist von einem Gehäuse 22 aus Kunststoff umgeben, das einen im Durchmesser erweiterten unteren Teil 24 hat, in dem die untere Abschlussscheibe 20 bündig aufgenommen ist. Im gezeigten Beispiel weist das Gehäuse 22 in seinem oberen Abschnitt ein Innengewinde auf, das zu einem Außengewinde des äußeren Gewindeteils 12 komplementär ist. Am unteren Ende des Gehäuses sind am Rand der Ausnehmung, die die Abschlussscheibe 20 aufnimmt, mehrere auf dem Umfang verteilte Rastklauen 26 gebildet, die einen Bund am äußeren Rand der Abschlussscheibe 20 untergreifen.

Am äußeren Umfang des Gehäuses 22 können elastische Clips 28 gebildet sein, die hier nur teilweise dargestellt sind und dazu dienen, das Toleranzausgleichselement an einem der miteinander zu verbindenden Bauteile zu verclipsen.

Im Inneren des inneren Gewindeteils 10 ist eine Hülse 30 aus Kunststoff gehalten, die einen in Axialrichtung durchgehenden zylindrischen Kanal 32 bildet. Durch diesen Kanal 32 ist eine nicht gezeigte Verbindungsschraube hindurchsteckbar, die dazu dient, die beiden Bauteile miteinander zu verbinden. Beispielsweise wird die Verbindungsschraube von oben durch ein Bauteil gesteckt, das an der oberen Abschlussscheibe 18 anliegt, und dann in eine Gewindebohrung des anderen Bauteils eingeschraubt, das an der unteren Abschlussscheibe 20 anliegt und an dem das Gehäuse 22 verclipst ist.

Die Hülse 30 ist auf einem Teil ihres Außenumfangs von einem hufeisenförmigen Federelement 34 umgeben, das auf der rechten Seite in Fig. 1 im Schnitt zu sehen ist. Die beiden Enden des hufeisenförmigen Federelements 34 bilden zwei einander diametral gegenüberliegende, nach innen weisende Vorsprünge 36, die jeweils ein in der Umfangswand der Hülse 30 gebildetes Fenster 38 durchgreifen und, wenn die Verbindungsschraube hindurch gesteckt ist, am Umfang des Gewindeabschnitts dieser Verbindungsschraube anliegen.

Die Hülse 30 weist im gezeigten Beispiel in den Teilen ihrer äußeren Umfangsfläche, die nicht von dem Federelement 34 umgeben sind, ein Außengewinde auf, das zu einem Innengewinde des inneren Gewindeteils 10 komplementär ist. Vom oberen Rand der Hülse 30 ragen mehrere auf dem Umfang verteilte Rastklauen 40 auf, mit denen die Hülse 30 in einer Stufenbohrung 42 der oberen Abschlussscheibe 18 verrastet ist.

In Fig. 2 sind die Hülse 30 und das Federelement 34 in einer perspektivischen Explosionsdarstellung gezeigt. Hier ist insbesondere die Konfiguration des Federelements 34 deutlicher zu erkennen.

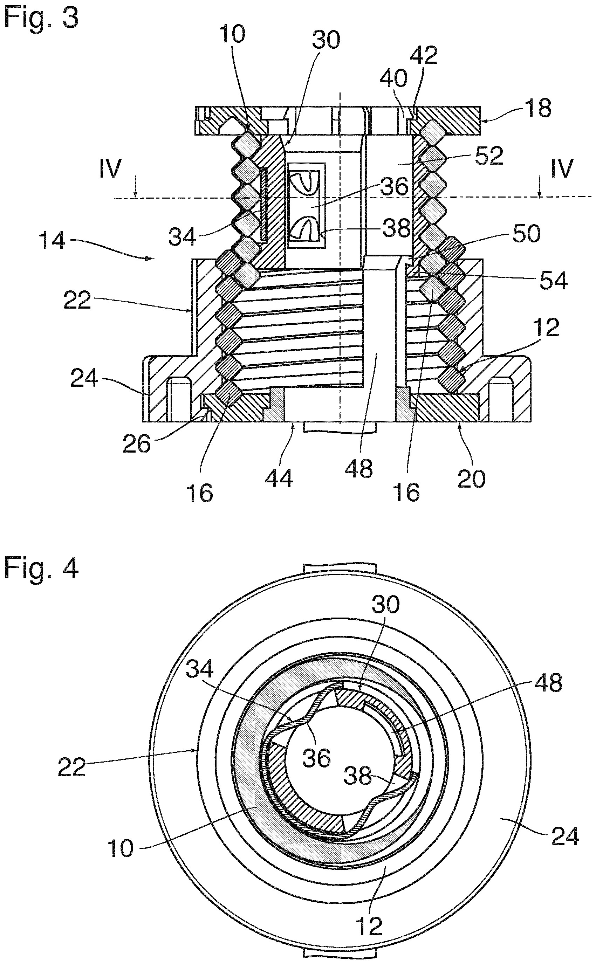

Wenn die Verbindungsschraube durch den Kanal 32 der Hülse 30 hindurch gesteckt ist und in eine Gewindebohrung des unteren der zu verbindenden Bauteile eingeschraubt wird, so werden durch den Reibschluss zwischen den Vorsprüngen 36 des Federelements 34 und dem Umfang der Verbindungsschraube die Hülse 30 und das innere Gewindeteil 10 in Drehrichtung mitgenommen, während das äußere Gewindeteil 12 drehfest bleibt, da es durch die Clips 28 an dem unteren Bauteil gehalten ist. Die Gewindeteile 10, 12 haben ein Linksgewinde, so dass, wenn die Verbindungsschraube rechts herum eingeschraubt wird, das innere Gewindeteil 10 nach oben aus dem äußeren Gewindeteil 12 herausgeschraubt wird, wie in Fig. 3 zu erkennen ist. Diese Ausschraubbewegung des inneren Gewindeteils 10 hält so lange an, bis die obere Abschlussscheibe 18 an dem oberen der zu verbindenden Bauteile anstößt und der Abstandshalter 14 somit den Abstand zwischen den beiden Bauteilen überbrückt. Da dann das innere Gewindeteil 10 nicht weiter ausgeschraubt werden kann, rutscht die durch die Vorsprünge 36 und die Verbindungsschraube gebildete Kupplung durch, so dass die Verbindungsschraube weiter eingeschraubt werden kann, bis die beiden zu verbindenden Bauteile fest miteinander verspannt sind.

Damit das innere Gewindeteil 10 nicht vollständig aus dem äußeren Gewindeteil 12 herausgeschraubt werden kann, so dass die beiden Bauteile auseinanderfallen würden, ist an der unteren Abschlussscheibe 20 eine Ausdrehsicherung 44 gehalten. Wie am besten in der perspektivischen Darstellung in Fig. 2 zu erkennen ist, handelt es sich bei der Ausdrehsicherung 44 um ein insgesamt ringförmiges Bauteil, das am unteren Ende einen umlaufenden Bund 46 bildet und von dem an einer Stelle des Umfangs nach oben ein Arm 48 ausgeht, der am freien Ende eine nach außen gekröpfte Klaue 50 trägt.

Wie Fig. 1 zeigt, erstreckt sich der Arm 48 axial durch den Kanal 32 der Hülse 30, und er ist dabei in einer axialen Nut 52 aufgenommen, die in der inneren Umfangsfläche der Hülse 30 gebildet ist. Am unteren Ende ist die Nut 52 durch einen Anschlag 54 für die Klaue 50 begrenzt.

Der Bund 46 der Ausdrehsicherung ist so in einer Stufenbohrung der unteren Abschlussscheibe 20 aufgenommen, dass sich die Ausdrehsicherung 44 nicht relativ zu der Abschlussscheibe 20 nach oben bewegen kann.

Wenn nun das innere Gewindeteil 10 in Ausschraubrichtung (rechts herum) relativ zu dem äußeren Gewindeteil 12 gedreht wird, so bewegt sich die Hülse 30 zusammen mit dem inneren Gewindeteil 10 nach oben, und die Klaue 50 läuft in der Nut 52 nach unten, bis sie den Anschlag 54 erreicht. Auf diese Weise wird die Ausschraubbewegung des inneren Gewindeteils 10 begrenzt.

In Fig. 3 ist der Zustand gezeigt, in dem das innere Gewindeteil 10 seinen maximalen Ausschraubweg erreicht hat und die Klaue 50 an dem Anschlag 54 anliegt. Durch die Begrenzung des Ausschraubweges wird erreicht, dass die Gewindeteile 10 und 12 stets ausreichend miteinander in Eingriff bleiben, so dass die beiden Gewindeteile sicher miteinander verbunden bleiben und der Abstandshalter 14 insgesamt noch ein hohe Axialkraft aufnehmen kann.

Da das innere Gewindeteil 10 und die Hülse 30 beim Übergang von der in Fig. 1 gezeigten Position in die Position nach Fig. 3 um eine nicht ganzzahlige Anzahl von Umdrehungen gedreht wurden, erscheinen sie in Fig. 3 in einer verdrehten Position. Auch das Federelement 34 ist demgemäß in Fig. 3 in einer verdrehten Position gezeigt. Der ringförmige Teil der Ausdrehsicherung 44 ist in der Stufenbohrung der unteren Abschlussscheibe 20 drehbar, so dass auch der Arm 48 der Drehbewegung der Nut 52 der Hülse 30 folgen kann. Der Arm 48 verbleibt somit stets in einer Winkelstellung, die dem offenen Ende des hufeisenförmigem Federelements 34 entspricht, wie deutlich in Fig. 4 zu sehen ist.

In Fig. 4 erkennt man auch, dass der Arm 48 und die dazu komplementäre Nut der Hülse 30 ein (gekrümmtes) Schwalbenschwanzprofil haben, so dass sich der Arm 48 in der Nut 52 ausschließlich in axialer Richtung bewegen kann.

Bei der Montage des Toleranzausgleichselements kann man beispielsweise wie folgt vorgehen.

Das Gehäuse 22 wird mit seinem Innengewinde auf das Außengewinde des äußeren Gewindeteils 12 aufgeschraubt. Anschließend wird die Abschlussscheibe 20 in das untere Ende des Gehäuses 22 eingedrückt. Dabei werden die Rastklauen 26 vorübergehend nach außen ausgelenkt, und sie rasten dann an dem Bund am äußeren Umfang der Abschlussscheibe 20 ein, wodurch das Gehäuse 22 und das äußere Gewindeteil 12 unverlierbar mit der Abschlussscheibe 20 verbunden werden.

Das Federelement 34 wird ausgehend von der in Fig. 2 gezeigten Position radial auf den Umfang der Hülse 30 aufgeschoben, bis die Vorsprünge 36 in den Fenstern 38 einrasten. Anschließend wird die Hülse 30 zusammen mit dem Federelement 34 von unten in das innere Gewindeteil 10 eingeschraubt. Danach wird die Abschlussscheibe 18 auf das obere Ende des Gewindeteils 10 und der Hülse 30 aufgedrückt. Dabei rasten die Rastklauen 40 in der Stufenbohrung 42 ein, so dass die Abschlussscheibe 18 unverlierbar an der Hülse 30 und dem innern Gewindeteil 10 gehalten wird.

Danach wird die Einheit aus innerem Gewindeteil 10, Hülse 30 und Federelement 34 von oben in das Innengewinde des äußeren Gewindeteils 12 eingeschraubt.

Schließlich wird der Arm 48 der Ausdrehsicherung 44 von unten in den Kanal 32 der Hülse 30 eingeführt und, sobald sich die Klaue 50 in einer Position oberhalb des Anschlags 54 befindet, radial nach außen bewegt, so dass die Klaue 50 über den Anschlag 54 greifen kann. Die Verjüngung des Schwalbenschwanzprofils kann so klein sein, das sich der Arm 48 in einer radial auswärts gerichteten Bewegung in der Nut 52 verrasten lässt. Wahlweise kann das Schwalbenschwanzprofil der Nut 52 am unteren Ende, angrenzend an den Anschlag 54, etwas erweitert sein, so dass sich das die Klaue 50 tragende Ende in die Nut einführen lässt und der Arm 48 dann axial in das Schwalbenschwanzprofil eingeführt werden kann.

Wenn die in Fig. 1 gezeigte Position erreicht ist, rastet eine am äußeren Umfang des ringförmigen Teils der Ausdrehsicherung gebildete Nase 56 an der Oberseite der Abschlussscheibe 20 ein, während sich der Bund 46 in die Stufenbohrung dieser Abschlussscheibe legt. Auch die Ausdrehsicherung 44 ist dann unverdrehbar an dem Toleranzausgleichselement gehalten, das sich dann in einem einsatzbereiten Zustand befindet.

## Patentansprüche

1. Toleranzausgleichselement für eine Vorrichtung zum Verbinden von Bauteilen mittels einer durch das Toleranzausgleichselement hindurch gesteckten Verbindungsschraube, welches Toleranzausgleichselement ein Federelement (34), ein inneres und ein äußeres Gewindeteil (10, 12), die miteinander in Gewindeeingriff stehen und zusammen einen in der Länge verstellbaren Abstandshalter (14) bilden, und eine in dem inneren Gewindeteil (10) gehaltene Hülse (30) aufweist, die das Federelement (34) in einer Position hält, in der es mit dem Umfang der durchgesteckten Verbindungsschraube in Reibberührung kommt, **dadurch gekennzeichnet, dass** das Toleranzausgleichselement eine Ausdrehsicherung (44) in der Form eines Ringes aufweist, der sich drehbar an einem Ende des Abstandshalters (14) abstützt und mindestens einen axial in die Hülse (30) ragenden Arm (48) aufweist, der am freien Ende eine nach außen gekröpfte Klaue (50) bildet, an der ein an der Hülse (30) gebildeter Anschlag (54) anstößt, wenn ein maximaler Ausschraubweg des inneren Gewindeteils (10) erreicht ist.

2. Toleranzausgleichselement nach Anspruch 1, bei dem der Arm (48) der Ausdrehsicherung in einer hinterschnittenen Nut (52) in der inneren Umfangsfläche der Hülse (30) aufgenommen ist ein zu dem Profil der Nut komplementäres Profil aufweist.

3. Toleranzausgleichselement nach Anspruch 1 oder 2, bei dem die Hülse (30) zumindest auf einem Teil ihres Außenumfangs ein Gewinde aufweist, das es erlaubt, die Hülse (30) in das innere Gewindeteil (10) einzuschrauben.

4. Toleranzausgleichselement nach einem der vorstehenden Ansprüche, bei dem zumindest eines der Gewindeteile (10, 12) aus einem zu einer Wendel gewickelten Draht (16) hergestellt ist.

5. Toleranzausgleichselement nach Anspruch 4, bei dem der Draht (16) einen quadratischen Querschnitt hat und so gewickelt ist, dass eine Diagonale des quadratischen Querschnitts in Axialrichtung der Wendel verläuft und die Kanten der einzelnen Windungen auf Block aneinander liegen.

6. Toleranzausgleichselement nach Anspruch 4 oder 5, bei dem beide Gewindeteile (10, 12) aus gewickeltem Draht (16) gebildet sind.

7. Toleranzausgleichselement nach einem der Ansprüche 4 bis 6, bei dem an mindestens einem Ende des Abstandshalters (14) eine Abschlussscheibe (18, 20) aus Metall angeordnet ist, in die auf der dem Draht (16) zugewandten Seite ein Relief eingeprägt ist, das zu der letzten Windung des Drahtes (16) mindestens eines der Gewindeteile (10, 12) komplementär ist.

8. Toleranzausgleichselement nach den Anspruch 7, bei dem die Hülse (30) mit der an dem inneren Gewindeteil (12) anliegenden Abschlussscheibe (18) verclipst ist.

9. Toleranzausgleichselement nach einem der vorstehenden Ansprüche, bei dem das äußere Gewindeteil (12) von einem Gehäuse (22) aus Kunststoff umgeben ist.

10. Toleranzausgleichselement nach Anspruch 9, bei dem das Gehäuse (22) ein Innengewinde aufweist und auf ein Außengewinde des äußeren Gewindeteils (10) aufgeschraubt ist.

11. Toleranzausgleichselement nach den Ansprüchen 9 und 10, bei dem das Gehäuse (22) mit der an dem äußeren Gewindeteil (12) anliegenden Abschlussscheibe (20) verclipst ist.

12. Toleranzausgleichselement nach einem der Ansprüche 7 bis 11, bei dem der ringförmige Teil der Ausdrehsicherung (44) an seinem äußeren Umfang einen Bund (46) aufweist und drehbar in einer Stufenbohrung der Abschlussscheibe (20) des äußeren Gewindeteils (12) aufgenommen ist.

## Claims

1. A tolerance compensating element for a device for connecting components by means of a connecting screw, said tolerance compensating element comprising a spring element (34), an inner and an outer threaded part (10, 12), which are in threaded engagement with one another and, together, form a length-adjustable spacer (14), and a sleeve (30) which is held in the inner threaded part (10) and holds the spring element (34) in a position in which it comes into frictional contact with the circumference of the inserted connecting screw, **characterised in that** the tolerance compensating element has an unscrew protection device (44) in the form of a ring that is rotatably supported at one end of the spacer (14) and comprises at least one arm (48) which projects axially into the sleeve (30) and, at the free end, forms an outwardly cranked claw (50) against which a stop (54) formed on the sleeve (30) abuts when a minimum unscrewing distance of the inner threaded part (10) is reached.

2. The tolerance compensating element according to claim 1, wherein the arm (48) of the unscrew protection device is received in an undercut groove (52) in the inner peripheral surface of the sleeve (30) and has a profile complementary to the profile of that groove.

3. The tolerance compensating element according to claim 1 or 2, wherein the sleeve (30) has, at least on a part of its outer periphery, a thread that permits to screw the sleeve (30) into the inner threaded part (10).

4. The tolerance compensating element according to any of the preceding claims, wherein at least one of the threaded parts (10, 12) is formed of a wire (16) that has been wound into a coil.

5. The tolerance compensating element according to claim 4, wherein the wire (16) has a square cross-section and is wound such that a diagonal of the square cross-section extends in axial direction of the coil and the individual turns are engaging one another in a block configuration.

6. The tolerance compensating element according to claim 4 or 5, wherein both threaded parts (10, 12) are formed of wound wire (16).

7. The tolerance compensating element according to any of the claims 4 to 6, wherein a metal terminating disk (18, 20) is mounted on at least one end of the spacer (14), said disk having, on the side facing the wire (16), a depressed relief that is complementary to the last turn of the wire (16) of at least of the threaded parts (10, 12).

8. The tolerance compensating element according to claim 7, wherein the sleeve (30) is snap-fastened to the terminating disk (18) that engages the inner threaded part (10).

9. The tolerance compensating element to any of the preceding claims, wherein the outer threaded part (12) is surrounded by a plastic casing (22).

10. The tolerance compensating element according to claim 9, wherein the casing (22) has an internal thread and is screwed onto an external thread of the outer threaded part (12).

11. The tolerance compensating element according to the claims 9 and 10, wherein the casing (22) is snap-fastened to the terminating disk (20) that engages the outer threaded part (12).

12. The tolerance compensating element according to any of the claims 7 to 11, wherein the annular part of the unscrew protection device (44) has, at its outer periphery, a collar (46) and is rotatably received in a stepped bore of the terminating disk (20) of the outer threaded part (12).

## Revendications

1. Élément de compensation des tolérances pour un dispositif pour la liaison de composants au moyen d'une vis de liaison insérée à travers l'élément de compensation des tolérances, cet élément de compensation des tolérances comprenant un élément de ressort (34), une partie à filetage interne et une partie à filetage externe (10, 12), qui sont visées entre elles et qui constituent ensemble une entretoise (14) réglable en longueur, et un manchon (30), maintenu dans la partie à filetage interne (10), qui maintient l'élément de ressort (34) dans une position dans laquelle il entre en contact par friction avec la circonférence de la vis de liaison insérée, **caractérisé en ce que** l'élément de compensation des tolérances comprend une sécurité anti-rotation (44) sous la forme d'une bague qui s'appuie de manière rotative à une extrémité de l'entretoise (14) et qui comprend au moins un bras (48) dépassant dans le manchon (30), qui forme, à l'extrémité libre, une griffe (50) coudée vers l'extérieur, contre laquelle s'appuie une butée (54) formée sur le manchon (30), lorsqu'une course de vissage maximale de la partie à filetage interne (10) est atteinte.

2. Élément de compensation des tolérances selon la revendication 1, dans lequel le bras (48) de la sécurité anti-rotation est logé dans une rainure à contre-dépouille (52) dans la surface circonférentielle du manchon (30) et présente un profil complémentaire du profil de la rainure.

3. Élément de compensation des tolérances selon la revendication 1 ou 2, dans lequel le manchon (30) comprend, au moins sur une partie de sa circonférence externe, un filetage permettant de visser le manchon (30) dans la partie à filetage interne (10).

4. Élément de compensation des tolérances selon l'une des revendications précédentes, dans lequel une des parties filetées (10, 12) est fabriquée à partie d'un fil (16) enroulé en spirale.

5. Élément de compensation des tolérances selon la revendication 4, dans lequel le fil (16) présente une section carrée et est enroulé de façon à ce qu'une diagonale de la section carrée s'étende dans la direction axiale de la spirale et à ce que les arêtes des différents enroulements soient juxtaposées à bloc.

6. Élément de compensation des tolérances selon la revendication 4 ou 5, dans lequel les deux parties filetées (10, 12) sont constituées d'un fil (16) enroulé.

7. Élément de compensation des tolérances selon l'une des revendications 4 à 6, dans lequel, au niveau d'au moins une extrémité de l'entretoise (14), est disposée une rondelle de fermeture (18, 20) en métal, dans laquelle, sur le côté orienté vers le fil (16), un relief est estampé, qui est complémentaire du dernier enroulement du fil (16) d'au moins une des parties filetées (10, 12).

8. Élément de compensation des tolérances selon la revendication 7, dans lequel le manchon (30) est clipsée avec la rondelle de fermeture (18) s'appuyant contre la partie à filetage interne (12).

9. Élément de compensation des tolérances selon l'une des revendications précédentes, dans lequel la partie à filetage externe (12) est entourée d'un boîtier (22) en matière plastique.

10. Élément de compensation des tolérances selon la revendication 9, dans lequel le boîtier (22) comprend un filetage interne et est vissé sur un filetage externe de la partie à filetage externe (10).

11. Élément de compensation des tolérances selon les revendications 9 et 10, dans lequel le boîtier (22) est clipsée avec la rondelle de fermeture (20) s'appuyant contre la partie à filetage externe (12).

12. Élément de compensation des tolérances selon l'une des revendications 7 à 11, dans lequel la partie annulaire de la sécurité anti-rotation (44) comprend, sur sa circonférence interne, un col (46) et est logée de manière rotative dans un perçage échelonné de la rondelle de fermeture (20) de la partie à filetage externe (12).
